(19) Europäisches Patentamt

European Patent Office

Office européen des brevets

(11) Veröffentlichungsnummer: **0 269 970 B1**

# (12) EUROPÄISCHE PATENTSCHRIFT

(45) Veröffentlichungstag der Patentschrift: **08.01.92**

(21) Anmeldenummer: **87117236.7**

(22) Anmeldetag: **23.11.87**

(51) Int. Cl.⁵: **A23F 3/42**

(54) Verfahren zur Entaromatisierung und anschliessenden Rearomatisierung von Tee.

(30) Priorität: **29.11.86 DE 3640967**

(43) Veröffentlichungstag der Anmeldung:
**08.06.88 Patentblatt 88/23**

(45) Bekanntmachung des Hinweises auf die
Patenterteilung:
**08.01.92 Patentblatt 92/02**

(84) Benannte Vertragsstaaten:
**AT BE CH DE FR GB IT LI LU NL SE**

(56) Entgegenhaltungen:
**CH-A- 525 623**
**US-A- 4 167 589**

(73) Patentinhaber: **SKW Trostberg Aktiengesellschaft**
**Dr.-Albert-Frank-Strasse 32 Postfach 12 62**
**W-8223 Trostberg(DE)**

(72) Erfinder: **Schütz, Erwin, Dr.**
**Drosselweg 2**
**W-8223 Trostberg(DE)**
Erfinder: **Vollbrecht, Heinz-Rüdiger, Dr.**
**Herzog-Nikolaus-Strasse 15**
**W-8221 Stein/Traun(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**W-8000 München 86(DE)**

## Beschreibung

Die Erfindung betrifft ein Verfahren zur Entaromatisierung und anschließenden Rearomatisierung von schwarzem oder grünem Tee.

Ein solches Verfahren ist besonders zur Herstellung von entkoffeiniertem schwarzem Tee interessant, weil es bei der Entkoffeinierung von fermentiertem Tee in der Regel Probleme mit den Aromastoffen (Veränderung des Aromaprofils) gibt. Aus diesem Grund kann es sinnvoll sein, dem Tee zunächst die flüchtigen Aromabestandteile zu entziehen, den Tee dann zu entkoffeinieren und den entkoffeinierten Tee anschließend mit den entzogenen Aromastoffen wieder zu imprägnieren.

Diese Probleme bei der Entkoffeinierung treten sowohl bei der Verwendung von organischen Lösemitteln als auch bei der Entkoffeinierung mit komprimierten Gasen mehr oder weniger stark auf.

Die Entaromatisierung, d.h. der Entzug der flüchtigen Aromabestandteile von Tee ist bekannt und wird vor allem zur Herstellung von Instant-Tees technisch genutzt. Zur Entfernung der flüchtigen Aromabestandteile wird entweder die Wasserdampf- oder die Vakuumdestillation bevorzugt. Nachteilig bei der Wasserdampfdestillation sind die relativ hohen Temperaturen, welche sehr leicht die temperaturempfindlichen Aromastoffe schädigen können, sowie die technisch aufwendigen Verfahren zur anschließenden Aufkonzentrierung der Aromabestandteile. Dies geschieht in der Regel durch Extraktion mit einem organischen Lösemittel, dessen restlose Entfernung ebenfalls erhebliche Probleme aufwirft.

Die Vakuumdestillation ist technisch ebenfalls aufwendig, sowohl im Hinblick auf die apparativen Anforderungen, als auch auf die anschließende Kondensation der Aromastoffe bei sehr tiefen Temperaturen. Schließlich wird in der DE-AS 21 27 642 ein mehrstufiges Verfahren beschrieben, bei welchem im ersten Verfahrensschritt mit trockenem überkritischem $CO_2$ dem trockenen Tee die Aromastoffe entzogen werden sollen, anschließend in einem zweiten Schritt mit feuchtem überkritischem $CO_2$ selektiv das Koffein extrahiert wird und schließlich dem Tee die abgetrennten Aromastoffe wieder aufimprägniert werden. Es hat sich jedoch gezeigt, daß sich die Aromastoffe in der ersten Stufe auf diese Weise nicht vollständig entfernen lassen, so daß es bei der anschließenden Entkoffeinierung trotzdem zu Aromaverschiebungen kommt. Ein weiterer Nachteil ist die relativ kostspielige Entfernung der Aromastoffe mit überkritischen Gasen.

Der vorliegenden Erfindung liegt daher die Aufgabe zugrunde, ein Verfahren zur Entaromatisierung und anschließenden Rearomatisierung von schwarzem oder grünem Tee zu schaffen, welches die genannten Nachteile des Standes der Technik nicht aufweist und welches es mit geringem technischem Aufwand ermöglicht, die Aromastoffe praktisch vollständig zu übertragen.

Diese Aufgabe wird erfindungsgemäß dadurch gelöst, daß man

a) aus befeuchtetem Tee die flüchtigen Aromabestandteile mit Hilfe eines feuchten Inertgases bei Temperaturen von 60 bis 100°C durch Trägergasdestillation entfernt,

b) dem feuchten, die flüchtigen Aromabestandteile enthaltenden Inertgasstrom selektiv das Wasser entzieht und

c) anschließend zur Rearomatisierung die flüchtigen Aromabestandteile mit Hilfe eines trockenen Inertgasstromes durch den trockenen, zu aromatisierenden Tee hindurchleitet.

Es hat sich nämlich überraschenderweise gezeigt, daß man mit Hilfe des erfindungsgemäßen Verfahrens eine praktisch vollständige Entaromatisierung des Tees erreichen kann, ohne daß es dabei zur Schädigung der Aromastoffe kommt, und daß die anschließende Rearomatisierung wieder zu einem Tee mit guten sensorischen Eigenschaften führt. Dies war besonders deshalb überraschend, weil speziell die Aromabestandteile des Tees bekanntermaßen schwierig zu handhaben sind.

Beim Verfahren der vorliegenden Erfindung wird der zu behandelnde Tee zunächst befeuchtet, so daß er vorzugsweise 15 bis 40 Gew.-% Feuchtigkeit aufweist. Die Einstellung des Feuchtigkeitsgehalts läßt sich problemlos durch Zusatz der jeweils erforderlichen Wassermenge zum mehr oder weniger trockenen Tee in einer geeigneten Mischvorrichtung und anschließender Mischung bis zur gleichmäßigen Verteilung der Feuchtigkeit erreichen. Unter Tee werden hier Teeblätter und daraus durch Zerkleinern, Kompaktieren und dgl. gebildete Produkte verstanden.

Der so erhaltene befeuchtete Tee wird daraufhin einer Trägergasdestillation unterworfen, wobei die flüchtigen Aromabestandteile des Tees mit Hilfe eines ebenfalls feuchten Inertgassstromes destilativ entfernt werden. Die Trägergasdestillation, welche vorzugsweise bei Normaldruck und mit den technisch üblichen Vorrichtungen durchgeführt wird, erfolgt zweckmäßig bei 60 bis 90°C, vorzugsweise bei 70 bis 80°C, um die Aromastoffe weitgehend thermisch zu schonen. Jedoch können auch höhere Drücke angewendet werden.

Es ist erfindungswesentlich, daß die Trägergasdestillation mit Hilfe eines feuchten Inertgases vorgenommen wird, denn nur so wird eine chemische Veränderung der Aromastoffe weitgehend vermieden.

Als Inertgas im Sinne der vorliegenden Erfindung sind solche Gase zu verstehen, welche bei den angegebenen Destillationstemperaturen keine Veränderung der flüchtigen Aromastoffe hervorrufen und gesundheitlich unbedenklich sind. Hierzu sind vor allem Stickstoff, Kohlendioxid oder Edelgase wie z.B. Argon zu zählen.

Der relative Feuchtigkeitsgehalt der verwendeten Inertgase sollte über 60 % und vorzugsweise zwischen 80 und 95 % liegen.

Die Menge des eingesetzten Inertgases kann in weiten Grenzen variiert werden und beträgt vorzugsweise 100 bis 5000 1 Inertgas pro 100 g eingesetztem Tee.

In einer bevorzugten Ausführungsform wird während der Trägergasdestillation der mit den flüchtigen Aromabestandteilen beladene Inertgasstrom durch eine Kontaktzone mit Kupferoberfläche, insbesondere durch Kupferspäne hindurchgeleitet. Es hat sich nämlich gezeigt, daß hierdurch unerwünschte, durch Temperatur und Feuchtigkeit entstehende Fehlaromen im rearomatisierten Tee vermieden werden können. Diese Verfahrensvariante empfiehlt sich deshalb vor allem dann, wenn bei Temperaturen über 80° C destilliert wird. Die Kupferspäne, welche vorzugsweise in einer Teilchengröße von 1 bis 5 mm vorliegen, werden beispielsweise in einer Menge von 1 bis 100 g pro kg Tee eingesetzt. Andere Einsatzformen des Kupfers z.B. durch Verwendung von Leitungen aus Kupfer oder mit Kupferoberfläche sind ebenfalls geeignet.

Nach Durchlaufen der Destillationszone wird in der zweiten Stufe dem Inertgasstrom, der die flüchtigen Aromastoffe enthält, selektiv das Wasser entzogen. Dies kann auf verschiedenen Wegen erfolgen. So ist es möglich, das Wasser aus dem mit den Aromastoffen beladenen feuchten Inertgas weitgehend zu kondensieren und nach Abscheidung des Wassers das verbleibende Gemisch aus Inertgas und Aromastoffen wieder zu erwärmen.

Die Kondensation des Wassers wird zweckmäßig durch Temperatursenkung unter 50° C, vorzugsweise auf 25 bis 45° C, erreicht. Hierbei ist darauf zu achten, daß die Temperaturdifferenz zwischen Destillations- und Kondensationstemperatur nicht größer als ca. 40° C sein sollte, weil andernfalls die Gefahr besteht, daß nicht nur Wasser abscheidet, sondern auch Aromastoffe mitkondensiert werden.

Nach Abscheidung des Wassers wird das verbleibende Gemisch aus Inertgas und Aromastoffen wieder erwärmt, vorzugsweise um 20 bis 40° C.

Gemäß einer weiteren Verfahrensvariante ist es möglich, die selektive Wasserentfernung dadurch zu erreichen, daß man das Wasser nur teilweise kondensiert und die Restfeuchte des Inertgas-Aromastoff-Gemisches durch Adsorption an einem wasserbindenden Mittel entfernt.

Die Teilkondensation kann beispielsweise bei Temperaturen von 50 bis 60° C vorgenommen werden, wobei ein erheblicher Teil des Wassers und keine Aromastoffe kondensiert werden. Anschließend wird das Inertgas-Aromastoff-Gemisch mit seiner Restfeuchte noch durch eine Schüttung eines wasserbindenden Mittels geleitet. Das wasserbindende Mittel muß dabei so gewählt werden, daß nur Wasser, aber keine Aromastoffe adsorbiert werden. Hierbei haben sich vor allem Molekularsiebmaterial und Natriumsulfat bewährt und werden bevorzugt.

Nach der selektiven Wasserentfernung schließt sich der Rearomatisierungsschritt (Stufe c) an. Hierbei werden z.B. dem in Stufe a) entaromatisierten und ggf. mit komprimierten Gasen oder sonstigen Lösemitteln wie Methylenchlorid, Ethylacetat oder Wasser entkoffeinierten Tee die Aromastoffe aufimprägniert. Auch anderer Tee als ein aus Stufe a) gewonnener kann verwendet werden. Hierzu wird das Inertgas-Aromastoff-Gemisch mit dem zu aromatisierenden Tee gleichmäßig und intensiv vermischt oder durch ihn hindurchgeleitet. Der zu aromatisierende Tee muß in getrocknetem Zustand, d.h. mit einem Wassergehalt von < 10 Gew.-% vorliegen, um eine optimale Rearomatisierung zu erreichen. Der in Stufe a) anfallende entaromatisierte Tee muß daher vor der Rearomatisierung (und ggf. nach der Entkoffeinierung) getrocknet werden, was mit üblichen technischen Vorrichtungen problemlos duchgeführt werden kann, zumal dabei keine Beeinträchtigung des Aromaprofils eintritt.

Das vorliegende Verfahren eignet sich besonders für die koninuierliche Durchführung, da das Inertgas nach der Rearomatisierung ohne weiteren Reinigungsschritt nach Befeuchtung und ggf. Erwärmung in die Destillationsstufe zurückgeführt werden kann.

Der erfindungsgemäß gewonnene rearomatisierte Tee zeichnet sich durch seine guten sensorischen Eigenschaften aus und ist einem nach üblichen Entkoffeinierungsverfahren erhaltenen Tee in dieser Hinsicht deutlich überlegen. Das Verfahren eigenet sich aber auch allgemein zur Verstärkung bzw. Beeinflussung des Aromas von Tee aus beliebiger Vorbehandlung.

Die nachfolgenden Beispiele sollen die Erfindung näher erläutern.

Beispiel 1

70 g Schwarzer Tee wurden mit Wasser bis zu einer Feuchte von 30 Gew.-% befeuchtet und in einer Destillationsapparatur 2 Std. mit insgesamt 1000 1 Stickstoff, der bis zu einer relativen Feuchte von ca. 90 % mit Wasser befeuchtet war, einer Trägergasdestillation bei 80° C unterworfen. Das mit Aromastoffen beladene Gas wurde über eine Kontaktstrecke von 20 cm Kupferspänen geführt und zur Kondensation des Wassers auf 40° C abgekühlt. Nach Abscheidung des kondensierten Wassers wurde der Gasstrom auf 55 °C aufgeheizt und durch eine Schüttung von 70 g entaromatisiertem Tee einer Feuchte von 6 Gew.-%, der zuvor mit überkritischem Kohlendioxid entkoffeiniert worden war, geleitet, im Anschluß wieder aufgeheizt, mit Wasser gesättigt und in die Destillationsstufe zurückgeführt.

Der rearomatisierte Tee wurde im Vergleich zum entkoffeinierten und entaromatisierten eingesetzten Tee verkostet und gegenüber diesem klar bevorzugt.

Beispiel 2

70 g Schwarzer Tee wurden mit Wasser bis zu einer Feuchte von 30 Gew.-% befeuchtet und in einer Destillationsapparatur 3 Std. mit 1500 1 Stickstoff, der mit einer relativen Feuchte von ca. 90 % mit Wasser befeuchtet war, einer Trägergasdestillation bei 70 °C unterworfen. Das mit Aromastoffen beladene Gas wurde über eine Kontaktstrecke von 20 cm Kupferspänen geführt und zur Kondensation des Wassers auf 30 °C abgekühlt. Der Gasstrom wurde nach Abscheidung des kondensierten Wassers auf 50 °C aufgeheizt und durch eine Schüttung von 70 g Tee, der in Beispiel 1 entaromatisiert und anschließend mit überkritischem Kohlendioxid entkoffeiniert worden war, geleitet. Die Feuchte dieses Tees betrug 6,5 %. Nach Passieren dieser Teeschüttung wurde das Kreislaufgas wieder aufgeheizt und mit Wasser angereichert.

Der rearomatisierte Tee wurde im Vergleich zum eingesetzten, im Beispiel 1 entaromatisierten und entkoffeinierten Tee verkostet und gegenüber diesem klar bevorzugt.

Beispiel 3

70 g Schwarzer Tee wurden mit Wasser bis zu einer Feuchte von 30 Gew.-% befeuchtet und in einer Destillationsapparatur 1,5 Std. lang mit 600 1 Stickstoff, der mit einer relativen Feuchte von ca. 85 % mit Wasser befeuchtet war, einer Trägergasdestillation bei 90 °C unterworfen. Das mit Aromastoffen beladene Gas wurde über eine Kontaktstrecke von 20 cm Kupferspänen geführt und zur Kondensation des Wassers auf 40 °C abgekühlt. Der Gasstrom wurde nach Abscheidung des kondensierten Wassers auf 60 °C aufgeheizt und durch eine Schüttung von 70 g entaromatisiertem Tee, der zuvor mit Ethylacetat entkoffeiniert worden war, geleitet. Die Feuchte dieses Tees betrug 6 Gew.-%. Nach Passieren der Teeschüttung wurde das Gas wieder aufgeheizt und mit Wasser gesättigt.

Der rearomatisierte Tee wurde gegenüber dem eingesetzten, mit Ethylacetat entkoffeinierten Tee bei der vergleichenden Verkostung klar bevorzugt.

Beispiel 4

Aus 70 g Tee wurde analog den Bedingungen des Beispiels 1 das Aroma auf 70 g entkoffeinierten und entaromatisierten Tee übertragen. Im Gegensatz zum Beispiel 1 wurde aber der Stickstoffstrom nicht zur Kondensation des enthaltenen Wassers abgekühlt und danach weiter aufgeheizt, sondern lediglich auf 60 °C abgekühlt, das dabei kondensierte Wasser abgeschieden, dann durch eine Packung von 1000 g Molekularsieb geführt und schließlich durch 70 g entaromatisierten und mit $CO_2$ entkoffeinierten Tee geleitet.

Der rearomatisierte Tee wurde im Vergleich zum eingesetzten entaromatisierten Tee verkostet und gegenüber diesem deutlich bevorzugt.

**Patentansprüche**

1. Verfahren zur Entaromatisierung und anschließenden Rearomatisierung von schwarzem oder grünem Tee,
   **dadurch gekennzeichnet,**
   daß man
   a) aus befeuchtetem Tee die flüchtigen Aromabestandteile mit Hilfe eines feuchten Inertgases bei Temperaturen von 60 bis 95 °C durch Trägergasdestillation entfernt,
   b) dem feuchten, die flüchtigen Aromabestandteile enthaltenden Inertgasstrom selektiv das Wasser entzieht und
   c) anschließend zur Rearomatisierung die flüchtigen Aromabestandteile mit Hilfe eines trockenen Inertgasstromes durch trockenen, zu aromatisierenden Tee hindurchleitet.

2. Verfahren nach Anspruch 1,
   **dadurch gekennzeichnet,**
   daß der befeuchtete Tee einen Wassergehalt von 15 bis 40 Gew.-% aufweist.

3. Verfahren nach den Ansprüchen 1 und 2,
   **dadurch gekennzeichnet,**
   daß man die Trägergasdestillation bei 70 bis 80 °C durchführt.

4. Verfahren nach den Ansprüchen 1 bis 3,
   **dadurch gekennzeichnet,**
   daß man als Inertgas Stickstoff verwendet.

5. Verfahren nach den Ansprüchen 1 bis 4,
   **dadurch gekennzeichnet,**
   daß das feuchte Inertgas bei der Trägergasdestillation einen relativen Feuchtigkeitsgehalt von 80 bis 95 % aufweist.

6. Verfahren nach den Ansprüchen 1 bis 5,
   **dadurch gekennzeichnet,**

daß man pro 100 g Tee 100 bis 5000 1 Inertgas verwendet.

7. Verfahren nach einem der Ansprüche 1 bis 6,
   **dadurch gekennzeichnet,**
   daß man den bei der Trägergasdestillation erhaltenen, mit den flüchtigen Aromabestandteilen beladenen Inertgasstrom durch eine Kontaktzone mit Kupferoberfläche, insbesondere durch Kupferspäne leitet.

8. Verfahren nach Anspruch 7,
   **dadurch gekennzeichnet,**
   daß man pro 1 kg Tee 1 g bis 100 g Kupferspäne verwendet.

9. Verfahren nach einem der Ansprüche 1 bis 8,
   **dadurch gekennzeichnet,**
   daß man aus dem feuchten, mit Aromastoffen beladenen Inertgasstrom das Wasser selektiv durch Kondensation bei Temperaturen < 50° C abscheidet und anschließend das Inertgas-Aromastoff-Gemisch um 20 bis 40° C erwärmt.

10. Verfahren nach Anspruch 9,
    **dadurch gekennzeichnet,**
    daß man die Kondensation des Wassers bei Temperaturen von 25 bis 45° C durchführt.

11. Verfahren nach einem der Ansprüche 1 bis 8,
    **dadurch gekennzeichnet,**
    daß man die selektive Abscheidung des Wassers aus dem Inertgasstrom durch Teilkondensation und anschließende Adsorption des nicht kondensierten Wassers an einem wasserbindenden Mittel vornimmt.

12. Verfahren nach Anspruch 11,
    **dadurch gekennzeichnet,**
    daß man die Teilkondensation bei Temperaturen von 50 bis 60° C durchführt.

13. Verfahren nach Anspruch 11,
    **dadurch gekennzeichnet,**
    daß man als wasserbindendes Mittel Molekularsiebmaterial einsetzt.

14. Verfahren nach einem der Ansprüche 1 bis 13,
    **dadurch gekennzeichnet,**
    daß der trockene, zu aromatisierende Tee bei der Rearomatisierung einen Feuchtigkeitsgehalt von < 10 Gew.-% aufweist.

15. Verfahren nach den Ansprüchen 1 bis 14,
    **dadurch gekennzeichnet,**
    daß man es kontinuierlich durchführt.

16. Verfahren nach einem der Ansprüche 1 bis 15,

**dadurch gekennzeichnet,**
daß man dem Tee nach der Entaromatisierung und vor der Rearomatisierung das Koffein mit üblichen Lösemitteln entzieht.

## Claims

1. Process for the dearomatising and subsequent rearomatising of black or green tea, characterised in that one
   a) removes the volatile aroma components from moist tea with the help of a moist inert gas at temperatures of 60 to 95° C by carrier gas distillation,
   b) removes the water selectively from the moist, inert gas stream containing the volatile aroma components and
   c) subsequently, for rearomatising, passes the volatile aroma components through dry tea to be aromatised with the help of a dry inert gas stream.

2. Process according to claim 1, characterised in that the moistened tea has a water content of from 15 to 40 wt.%.

3. Process according to claims 1 and 2, characterised in that one carries out the carrier gas distillation at 70 to 80° C.

4. Process according to claims 1 to 3, characterised in that one uses nitrogen as inert gas.

5. Process according to claims 1 to 4, characterised in that, in the case of the carrier gas distillation, the moist inert gas has a relative moisture content of 80 to 95%.

6. Process according to claims 1 to 5, characterised in that one uses 100 to 5000 1 of inert gas per 100 g of tea.

7. Process according to one of claims 1 to 6, characterised in that one passes the inert gas stream laden with the volatile aroma components obtained in the case of the carrier gas distillation through a contact zone with copper surface, especially through copper turnings.

8. Process according to claim 7, characterised in that one uses 1 g to 100 g of copper turnings per 1 kg of tea.

9. Process according to one of claims 1 to 8, characterised in that one selectively separates the water from the moist inert gas stream laden with aroma materials by condensation at temperatures of < 50° C and subsequently warms the inert gas-aroma material mixture by 20 to 40° C.

10. Process according to claim 9, characterised in that one carries out the condensation of the water at temperatures of 25 to 45° C.

11. Process according to one of claims 1 to 8, characterised in that one carries out the selective separation of the water from the inert gas stream by partial condensation and subsequent adsorption of the non-condensed water on a water-binding agent.

12. Process according to claim 11, characterised in that one carries out the partial condensation at temperatures of 50 to 60° C.

13. Process according to claim 11, characterised in that one uses molecular sieve material as water-binding agent.

14. Process according to one of claims 1 to 13, characterised in that the dry tea to be aromatised has, in the case of the rearomatisation, a moisture content of < 10 wt.%.

15. Process according to claims 1 to 14, characterised in that one carries it out continuously.

16. Process according to one of claims 1 to 15, characterised in that one removes the caffeine from the tea with usual solvents after the dearomatising and before the rearomatising.

**Revendications**

1. Procédé de désaromatisation et de réaromatisation subséquente du thé noir ou vert, caractérisé en ce que
   a) l'on élimine du thé humidifié les composants aromatisants à l'aide d'un gaz inerte humide à des températures de 60 à 95° C par distillation avec un gaz vecteur,
   b) l'on retire sélectivement l'eau du courant de gaz inerte, humide, contenant les composants aromatisants volatils,
   c) puis, pour la réaromatisation, on fait passer dans du thé sec à aromatiser les composants aromatisants volatils à l'aide d'un courant de gaz inerte sec.

2. Procédé selon la revendication 1, caractérisé en ce que le thé humidifié présente une teneur en eau de 15 à 40% en poids.

3. Procédé selon les revendications 1 et 2, caractérisé en ce que l'on effectue la distillation avec un gaz vecteur entre 70 et 80° C.

4. Procédé selon les revendications 1 à 3, caractérisé en ce que l'on utilise l'azote comme gaz inerte.

5. Procédé selon les revendications 1 à 4, caractérisé en ce que le gaz inerte humide présent lors de la distillation avec un gaz vecteur une teneur en humidité relative de 80 à 95%.

6. Procédé selon les revendications 1 à 5, caractérisé en ce que l'on utilise pour 100 g de thé 100 à 5000 1 de gaz inerte.

7. Procédé selon l'une des revendications 1 à 6, caractérisé en ce que l'on conduit le courant de gaz inerte chargé des composants aromatisants volatils obtenu lors de la distillation avec un gaz vecteur à travers une zone de contact à surface de cuivre, en particulier à travers des copeaux de cuivre.

8. Procédé selon la revendication 7, caractérisé en ce que l'on utilise par kg de thé 1 à 100 g de copeaux de cuivre.

9. Procédé selon l'une des revendications 1 à 8, caractérisé en ce que l'on sépare sélectivement l'eau du courant de gaz inerte chargé de substances aromatisantes par condensation à des températures < 50° C puis on chauffe le mélange gaz inerte-substances aromatisantes entre 20 et 40° C.

10. Procédé selon la revendication 9, caractérisé en ce que l'on effectue la condensation de l'eau à des températures de 25 à 45° C.

11. Procédé selon l'une des revendications 1 à 8, caractérisé en ce que l'on effectue la séparation sélective de l'eau du courant de gaz inerte par condensation partielle et adsorption subséquente de l'eau non condensée sur un agent fixant l'eau.

12. Procédé selon la revendication 11, caractérisé en ce que l'on effectue la condensation partielle à des températures de 50 à 60° C.

13. Procédé selon la revendication 11, caractérisé en ce que l'on utilise un tamis moléculaire comme agent fixant l'eau.

14. Procédé selon l'une des revendications 1 à 13, caractérisé en ce que le thé sec à aromatiser présente lors de la réaromatisation une teneur en humidité < 10% en poids.

15. Procédé selon les revendications 1 à 14, caractérisé en ce qu'on le met en oeuvre en continu.

16. Procédé selon l'une des revendications 1 à 15, caractérisé en ce que l'on extrait du thé la caféine avec des solvants habituels après la désaromatisation et avant la réaromatisation.